# EUROPEAN PATENT APPLICATION

(11) **EP 2 068 223 A2**
(43) Date of publication of application: **10.06.2009**
(21) Application number: 08020544.6
(22) Date of filing: 26.11.2008
(51) Int. Cl.: G05F 3/08

(54) **Constant current source circuit**

(30) Priority: 05.12.2007 CN 200710032134
(71) Applicant: Nanker(Guang Zhou)Semiconductor Manufacturing Corp, Science City Guangdong (CN)
(72) Inventor: Wu, Wei-Kuo, Guang Zhou Science City Guangdong (CN)
(74) Representative: Kramer - Barske - Schmidtchen

(57) **Abstract**

The present invention discloses a constant current source circuit with energy saving and over voltage protection to provide a constant current source circuit with fewer elements, simple circuitry, energy saving and over voltage protection. The present invention includes a regulating circuit (1), a filtering capacitor (2) and a load (3), and further includes a depletion mode FET (field effect transistor) (4). The present invention can generally be applied to lamps, wherein the load is high voltage LED (light emitting diode) elements, or a lamp composed of several LED elements connected in series or serial-parallel connected. This invention can also be applied to an electronic circuit with high working voltage. This invention can also be applied to a DC motor with high working voltage. This invention can also be applied to an electrical thermal load with high resistivity.

## Description

### TECHNICAL FIELD OF THE INVENTION

The present invention is related to a constant current source circuit having advantageous energy savings and over voltage protection.

### DESCRIPTION OF THE RELATED ART

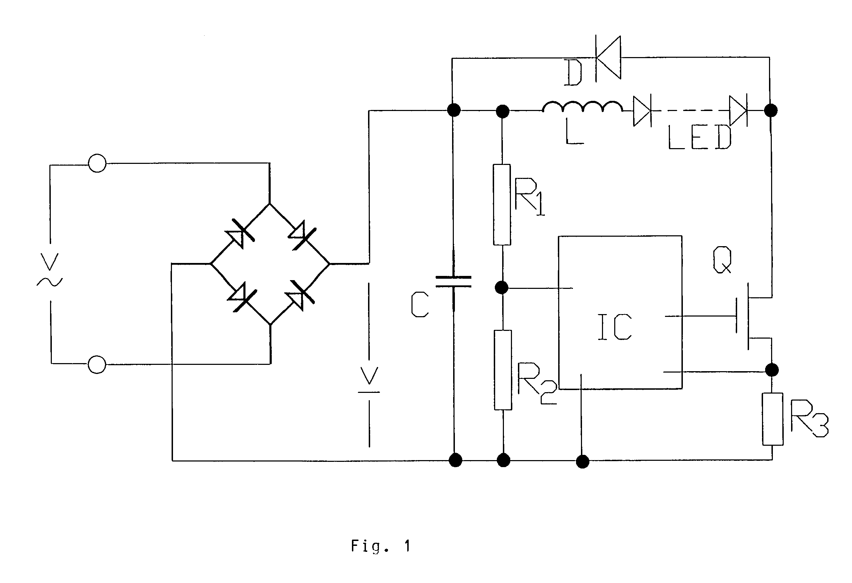

In practical applications, although many loads do not have large power consumption, they require electrical power that can maintain their currents and voltages to be relatively stable within a certain range. Meanwhile, the power supply is required to provide certain protection functions for some elements inside the load. To solve these electricity supply issues in the load, normally a constant current or voltage stabilization takes power, and the over current protection circuit still needs to be added in the power circuit to protect some elements of the load in abnormal conditions. This results in too many power elements, too complex a circuit, and large proportion of wasted power. FIG. 1, shows the prior art of the constant current and constant voltage circuit normally used in the market for LED. Although the LED itself does not have large power consumption, in order to achieve a constant current and constant voltage application, it needs to add one additional control IC, power transistor (Q), inductance (L), fast recovery diode (D), and three resistors(R1, R2 and R3). These elements (especially power transistors) will consume some power. Thus, the original LED application should have the function of electricity saving, but due to the circuit for achieving constant current and voltage, it cannot achieve the purpose of energy saving and power preservation.

In short, as aforementioned, the traditional constant current or voltage stabilization power circuit diagram used in the current technology have the drawbacks of more elements, complex circuitry, and waste of energy.

### SUMMARY OF THE INVENTION

The present invention is provided to solve the deficiency in the prior art and to have an improved constant current source circuit device, in particular including fewer elements, a simple circuitry, and may result in energy saving and over voltage protection.

According to the present invention, the above technical problem may be solved by a constant current source circuit comprising a regulating circuit, a filtering capacitor and a load. The circuit further comprises a depletion mode FET (field effect transistor). An AC (alternative current) input of the regulating circuit is connected to AC power, and DC (direct current) output of the regulating circuit is parallel-connected with the filtering capacitor. A drain of the depletion model FET is connected with one end of the DC output of the regulating circuit. A source and a gate of the depletion model FET are linked and connected with one end of the load, and the other end of the load is linked and connected with the other end of the DC output of the regulating circuit.

According to one exemplary embodiment of the present invention, the load includes one or more high voltage LED (light emitting diode) elements or a lamp composed of several LED elements serial connected or serial-parallel connected.

In another exemplary embodiment of the present disclosure, the load includes an electronic circuit with high working voltage.

In another exemplary embodiment of the present disclosure, the load includes a DC motor with high working voltage. Alternatively, the load can be an electrical thermal load with high resistivity.

The advantages of the present invention may be that fewer elements are required and/or a simpler circuitry is achieved, and/or more energy may be saved and/or an over voltage protection may be achieved.

### BRIEF DESCRIPTION OF THE INVENTION

- FIG. 1: is a schematic diagram of a traditional application circuit of the constant current and constant voltage for LED normally used in the market, and
- FIG. 2: is a schematic diagram of the present invention.

### DETAILED DESCRIPTION OF THE PREFERRED EMBODIMENT

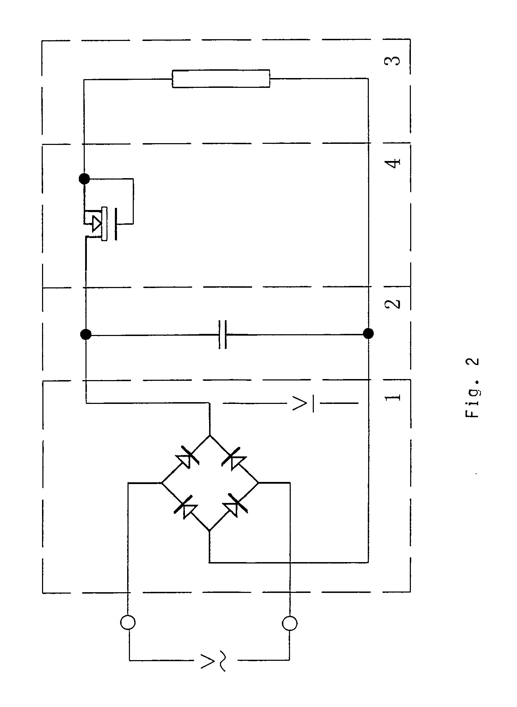

As shown in FIG. 2, the present invention includes a regulating circuit 1, a filtering capacitor 2 and a load 3, and further includes a depletion mode FET (field effect transistor) 4. An AC (alternative current) input of the regulating circuit 1 is connected with the AC power, and DC (direct current) output of the regulating circuit 1 is parallel-connected with the filtering capacitor 2. A drain of the depletion model FET 4 is connected with one end of the DC output of the regulating circuit 1. A source and a gate of the depletion model FET) 4 are linked and connected with one end of the load 3, and the other end of the load 3 is linked and connected with the other end of the DC output of the regulating circuit 1.

The load 3 can be high voltage LED (light emitting diode) elements or a lamp composed of several LED elements connected in series or serial-parallel connected. Alternatively, the load 3 can be an electronic circuit with high working voltage. According to another exemplary embodiment of the present invention, the load 3 can be an electrical thermal load with high resistivity or the load 3 can be a DC motor with high working voltage.

In practical application, series of LEDs can be connected in series such that the total resistive voltage load of all serial connected LED approaches merely 3-5 Volts, which is lower after regulating than the DC voltage. Then, the positive pole end of the LED elements is connected with the source/gate end of the depletion FET in series, and the drain of the depletion FET is connected with the positive pole end by regulating and filtering. The saturation current of the gate and the source under the same potential of the depletion FET can be adjusted according to the current requirement for the LED elements. Thus, a constant current can be provided to the LED elements. When the AC voltage is unstable and is especially higher than normal voltage, the over voltage will be added in between the drain and the source of the depletion FET without influencing the LED elements. Thus, protection of the LED elements by voltage stabilization can be achieved.

If the AC voltage is lower than normal voltage, the under voltage will first lower the voltage between the drain and the source of the depletion FET, then the resultant lowered voltage will be equally shared by every serial in connected LED. The result causes no damage to the LED, except causing a decrease in the current passing through the LED, and furthermore causes no unnecessary power consumption. Therefore, it can make the LED elements intrinsically achieve the objects of energy conservation and power saving. For the LEDs connected in series and each white light LED working under 3.2 volts/30mA (milli-ampere), the total voltage is about 307.2 volts and the output of the 220 volts AC is about 311V after being regulated and filtered. Therefore, if the drain of the depletion FET with an output current of 30mA is connected to the output of the regulating and the filtering, and the source and the gate are connected to the positive pole end of LED elements, the voltage drop between the drain and the source of the depletion FET will be about 3.88 Volts. Further, the power consumption of whole circuit will be about 9.33 Watts (=96×3.2×0.03+3.88×0.03). The total loss in the depletion FET is only 0.116 Watts (=3.88×0.03). The loss is only 1.2% of the total power consumption. Because the variation in AC voltage is between plus and minus 30 volts, the variation after regulating and filtering is between plus and minus 45 volts. If the voltage resisting ability of the depletion FET can be more than 50 volts, the depletion FET can protect the LED elements from over voltage even when AC power's voltage is unstable.

The method for manufacturing the depletion mode FET 4 in the present embodiment includes the following steps:
1. P-typed silicon substrate is thermally oxidized in the oxidation furnace to grow an oxide layer protecting film. Then, a first photo mask is utilized to process the photolithography in a photolithography machine, and a corrosive liquid containing HF (hydrofluoric acid) is used to etch the oxide layer's protecting film.
2. The p-type ions, such as boron difluorides or boron ions, are implanted into the silicon substrate. Furthermore, they are thermally driven-in to form the P+ guard ring and the P+ contacting region contacted with the substrate.
3. A second photo mask is used to process the photolithography in a photolithography machine; then a dry etching method is used to etch the oxide layer. Next, an ion implanter is used to implant the arsenic ions in the silicon substrate to form the heavily doped N+ region, that is, the N+ source region, N+ drain region and N+ guard ring.
4. A third photo mask is used to process the photolithography in a photolithography machine, and a corrosive liquid containing HF (hydrofluoric acid) is used to etch the oxide layer of the resist region, furthermore the dry/wet thermal oxidation to form the oxide layer. Then, the phosphorous ions are implanted. Furthermore, an N- channel region and an oxide layer are thermally formed by driving-in.
5. A fourth photo mask is used to process the photolithography in a photolithography machine; furthermore an etching method is used to etch the oxide layer to form drain through holes, source N+ through holes, and source P+ substrate through holes.
6. A sputtering or evaporation method is used to deposit a metal layer. Then, a metal layer mask is utilized to process the photolithography in a photolithography machine. Furthermore, a dry or wet etching method is used to etch the metal layer to form the drain metal, the source metal, the gate metal, and a connection metal.

Although the present invention has been explained in relation to its preferred embodiment, it is to be understood that many other possible modifications and variations can be made without departing from the spirit and scope of the invention as hereinafter claimed.

## Claims

1. A constant current source circuit comprising:
- a regulating circuit (1) comprising an AC input and a DC output;
- a filtering capacitor (2);
- a load (3); and
- a depletion mode FET (4) comprising a drain, a source, and a gate;
wherein:
- the AC input of the regulating circuit is connected with an AC power source,
- the DC output of the regulating circuit is parallel-connected with the filtering capacitor,
- the drain of the depletion model FET is connected with one end of the DC output end of the regulating circuit,
- the source and the gate of the depletion model FET are connected with each other and connected with one end of the load, and the other end of the load is connected with the other end of the DC output of the regulating circuit.

2. The constant current source circuit of claim 1, wherein the load (3) comprises one of high voltage LED (light emitting diode) elements or a lamp composed of several LED elements that are serial connected or serial-parallel connected.

3. The constant current source circuit of claim 1, wherein the load (3) is an electronic circuit with high working voltage.

4. The constant current source circuit of claim 1, wherein the load (3) is a DC motor with high working voltage.

5. The constant current source circuit of claim 1, wherein the load (3) is an electrical thermal load with high resistivity.
